# EUROPÄISCHE PATENTSCHRIFT

(11) **EP 3 139 236 B1**
(45) Veröffentlichungstag und Bekanntmachung des Hinweises auf die Patenterteilung: **09.02.2022**
(21) Anmeldenummer: 16181450.4
(22) Anmeldetag: 27.07.2016
(51) Int. Cl.: G05D 1/02, B60P 1/00, B62D 15/02, G06Q 10/08

(54) **VERFAHREN ZUR WEITERLEITUNG WENIGSTENS EINER SENDUNG VON EINEM WEITERGABEFAHRZEUG AN EIN ÜBERNAHMEFAHRZEUG SOWIE WEITERGABEFAHRZEUG**
METHOD FOR FORWARDING AT LEAST ONE LOAD FROM A TRANSFER VEHICLE TO A TAKEOVER VEHICLE AND TRANSFER VEHICLE
PROCEDE DE TRANSMISSION D'AU MOINS UN ENVOI PROVENANT D'UN VEHICULE DE TRANSFERT A UN VEHICULE D'ACQUISITION ET VEHICULE DE TRANSFERT

(30) Priorität: 03.09.2015 DE 102015114772
(43) Veröffentlichungstag der Anmeldung: 08.03.2017
(73) Patentinhaber: Deutsche Post AG, 53113 Bonn (DE)
(72) Erfinder: Wiechers, Dr. Ralph, 53508 Mayschoß (DE)
(74) Vertreter: Cohausz & Florack

(56) Entgegenhaltungen:
- WO-A1-2013/079247
- WO-A1-2014/184045
- KR-A- 20120 015 896
- US-A- 2 638 241
- US-A1- 2006 150 584
- US-A1- 2009 045 290

## Beschreibung

### Gebiet

Die Erfindung betrifft ein Verfahren zur Weiterleitung wenigstens einer Sendung von einem Weitergabefahrzeug an ein Übernahmefahrzeug. Ferner betrifft die Erfindung ein Weitergabefahrzeug zur Durchführung des Verfahrens.

### Hintergrund

Im modernen Warenverkehr werden Sendungen meist nicht direkt, sondern in mehreren Etappen bis zu einem vorgegebenen Zielort transportiert, wobei die Sendungen etappenweise mit unterschiedlichen Verkehrsmitteln transportiert werden. Bis die Sendungen den vorbestimmten Zielort erreichen, werden die Sendungen also oft mehrfach verladen. In vielen Fällen erfolgt das Verladen dabei von einem Landfahrzeug auf ein anderes Landfahrzeug, wobei als Landfahrzeug meist ein solches verwendet wird, das für den Warentransport über den öffentlichen Straßenverkehr vorgesehen ist. Insbesondere handelt es sich bei dem Fahrzeug um ein Nutzfahrzeug, also ein Fahrzeug, das nicht speziell für die Personenbeförderung, sondern insbesondere für den Transport von Nutzlast, also von Waren, Gütern, Sendungen und dergleichen ausgebildet ist. Nutzfahrzeuge sind dabei insbesondere Lastkraftwagen, Anhänger, Sattelauflieger und dergleichen.

Die Sendungen können direkt von einem Fahrzeug auf ein anderes Fahrzeug verladen oder aber auch zwischengelagert werden. In beiden Fällen werden von den Fahrzeugen meist spezielle Umschlagplätze angefahren, wo das Verladen der Sendungen erfolgt. Typischerweise ist das die zu übergebende Sendung anliefernde Fahrzeug vor dem Fahrzeug am Umschlagplatz, mit dem die Sendung weitertransportiert wird, so dass die Sendung bedarfsweise in einer Lagerhalle zwischengelagert wird. Durch das Verladen der Sendungen können Sendungen zu einer gemeinsamen Fracht zusammengestellt werden, die eine bestimmte Wegstrecke zusammen transportiert wird. Am Zielort der Fracht können die Sendungen erneut verladen und in anderer Kombination erneut zu einer Fracht zusammengestellt werden, die in dieselbe Richtung transportiert werden muss. So können unnötige Fahrten oder Fahrten mit nicht ausgelasteten Fahrzeugen vermieden werden. Dies führt nicht zuletzt zu verringerten Transportkosten. Allerdings ist das Verladen der Sendungen zwischen dem Startpunkt und dem Zielort der Sendung mit einem gewissen Zeitverlust verbunden und verringert die Flexibilität für den Transport einzelner Sendungen. Wenn ein sehr flexibler und/oder ein sehr schneller Transport von Sendungen erfolgen soll, werden die Sendungen daher oft direkt zugestellt, also auf dem direkten Weg zum Zielort gebracht. Dies ist jedoch in der Regel mit höheren Kosten verbunden, und zwar insbesondere, wenn die Sendung die Ladekapazität des Nutzfahrzeugs nur zum Teil in Anspruch nimmt, was in diesen Fällen oftmals gegeben ist. Hinsichtlich eines schnellen und zuverlässigen, zugleich aber kostengünstigen Transports von Sendungen besteht somit grundsätzlich noch weiterer Optimierungsbedarf.

Herkömmliche Verfahren zur Weiterleitung einer Sendung von einem Weitergabefahrzeug an ein Übernahmefahrzeug sind aus den Dokumenten US 2006/150584 A1, WO 2013/079247 A1, WO 2014/184045 A1 und KR 2012 0015896 A bekannt

### Zusammenfassung einiger beispielhafter Ausführungen der Erfindung

Der vorliegenden Erfindung liegt die Aufgabe zugrunde, das Verfahren und die Fahrzeuge jeweils der eingangs genannten und zuvor näher erläuterten Art derart auszugestalten und weiterzubilden, dass Sendungen bedarfsweise schneller und zuverlässiger transportiert werden können, ohne dass dies zu einem übermäßigen Anstieg der Transportkosten führt.

Diese Aufgabe ist durch ein Verfahren zur Weiterleitung wenigstens einer Sendung von einem Weitergabefahrzeug an ein Übernahmefahrzeug gemäß Anspruch 1 gelöst.

Die zuvor angegebene Aufgabe ist ferner gemäß Anspruch 12 durch ein Weitergabefahrzeug zur Durchführung des Verfahrens nach Anspruch 1 gelöst.

Die Erfindung hat erkannt, dass das Weiterleiten von Sendungen von einem Weitergabefahrzeug zu einem Übernahmefahrzeug zu einer Beschleunigung des Transports von Sendungen führt, obwohl die Sendungen etappenweise von unterschiedlichen Fahrzeugen transportiert werden, und zwar bedarfsweise jeweils mit weiteren Sendungen, die wenigstens teilweise in dieselbe Richtung oder zu demselben Etappenziel transportiert werden müssen. Es ist also nicht erforderlich, die Sendungen bei deren Übergabe von Fahrzeug zu Fahrzeug zwischenzulagern. Außerdem können unnötige Wege vermieden werden. Im Übrigen kann auf prinzipiell bewährte Transportprinzipien und Transportstrategien zurückgegriffen werden, was sich vorteilhaft auf die Zuverlässigkeit des Transports der Sendungen in einer vorbestimmten Zeit bis zum Zielort auswirkt. Bei dem Weitergabefahrzeug und dem Übernahmefahrzeug kann es sich grundsätzlich um recht unterschiedliche Fahrzeuge handeln, da das entsprechende Verfahren nicht an spezielle Fahrzeuge gebunden ist. Praktikabel und wirtschaftlich sinnvoll ist das Verfahren aber insbesondere bei Verwendung von Nutzfahrzeugen, beispielsweise Lastkraftwagen, Anhängern und/oder Sattelaufliegern.

Unter Sendungen werden vorliegend sehr unterschiedliche Gegenstände verstanden. Sendungen können unterschiedliche Formen, Größen und Gewichte aufweisen. Als Sendungen kommen Stückgüter, Verpackungen und dergleichen in Frage. Sendungen können grundsätzlich jeder Art von Waren sein, insbesondere Gegenstände des täglichen Bedarfs, wie Verbrauchsmaterialien oder Lebensmittel, sowie technische Gegenstände und Gerätschaften. Die Sendungen können bedarfsweise personenbezogen sein. In diesem Fall kommen als Sendungen beispielsweise Briefsendungen, Paketsendungen und/oder Flyer in Frage. Ein Flyer kann dabei bedarfsweise eine Broschüre, eine Zeitschrift und/oder ein Prospekt sein, während eine Paketsendung neben einem Paket auch ein Päckchen sein kann. Zudem kann eine Briefsendung neben einem Brief auch eine Postkarte sein. Die Sendung kann aber auch eine Mehrzahl von Briefsendungen, Paketsendungen und/oder Flyer umfassen.

Damit eine Sendung vom Weitergabefahrzeug an das Übergabefahrzeug übergeben werden kann, muss zunächst eine grobe Annäherung von Weitergabefahrzeug und Übernahmefahrzeug erfolgen. Dies geschieht anhand von Positionsdaten des Weitergabefahrzeugs und/oder des Übernahmefahrzeugs. Die Positionsdaten werden vorzugsweise in bedarfsweise regelmäßigen Abständen ermittelt. Dies kann das Weitergabefahrzeug und/oder das Übernahmefahrzeug selbst erledigen oder von außen erfolgen. Anhand der Positionsinformationen kann das Weitergabefahrzeug in Richtung des Übernahmefahrzeugs und/oder das Übernahmefahrzeug in Richtung des Weitergabefahrzeugs geleitet werden. Dies ermöglicht eine Annäherung der beiden Fahrzeuge auch über eine größere Distanz hinweg. Ein Blickkontakt zwischen den Fahrzeugen oder dergleichen ist dabei nicht erforderlich. Über die Positionsinformationen ist bekannt, wo sich etwa das andere Fahrzeug befindet. Zudem kann aus den Positionsinformationen in Abhängigkeit der Zeit ermittelt werden, mit welcher ungefähren Geschwindigkeit sich das fragliche Fahrzeug in welche Richtung bewegt. Daher bietet sich das beschriebene Verfahren insbesondere für den Fall an, dass das Weitergabefahrzeug und/oder das Übernahmefahrzeug über einen längeren Zeitraum mit ähnlicher Geschwindigkeit in eine ähnliche Richtung fährt. Das erleichtert jedenfalls die grobe Annäherung der Fahrzeuge über eine weite Distanz und vermeidet unnötige Transportwege.

Der groben Annäherung von Weitergabefahrzeug und Übernahmefahrzeug schließt sich eine feine Annäherung von Weitergabefahrzeug und Übernahmefahrzeug an.

Während die grobe Annäherung beispielsweise dazu führt, dass das Weitergabefahrzeug und das Übernahmefahrzeug überhaupt zueinander finden, dient die feine Annäherung beispielsweise der gewünschten Ausrichtung von Weitergabefahrzeug und Übernahmefahrzeug zueinander, um die wenigstens eine Sendung übergeben zu können. Daher sollte die Erfassung der relativen Position und relativen Geschwindigkeit von Weitergabefahrzeug und Übernahmefahrzeug bei der feinen Annäherung nach Möglichkeit viel genauer erfolgen als bei der groben Annäherung. Außerdem muss bei der feinen Annäherung eine Angleichung der Fahrtrichtung und der Geschwindigkeit erfolgen. Dies kann beispielsweise derart erfolgen, dass die Angleichung von Fahrtrichtung und Geschwindigkeit mit der räumlichen Annäherung von Weitergabefahrzeug und Übernahmefahrzeug zunehmen.

Haben sich das Weitergabefahrzeug und das Übernahmefahrzeug bis mindestens auf eine bestimmte Distanz aneinander angenähert, haben sich die Geschwindigkeiten und die Fahrtrichtungen vorzugsweise wenigstens im Wesentlichen aneinander angeglichen, so dass sie sich wenigstens im Wesentlichen gleichen. Die Angleichung der Geschwindigkeit erfolgt aber nicht in der Weise, dass das Weitergabefahrzeug und das Übernahmefahrzeug bis zum Stillstand abgebremst werden. Dann hätten sich prinzipiell auch die Fahrtrichtungen aneinander angeglichen. Vielmehr ist es so, dass das Weitergabefahrzeug und das Übernahmefahrzeug auch nach der Annäherung von Geschwindigkeit und Fahrtrichtung weiterfahren, nur eben im Wesentlichen mit derselben Geschwindigkeit und derselben Fahrtrichtung. Beispielsweise fahren das Weitergabefahrzeug und das Übernahmefahrzeug nebeneinander oder hintereinander her.

Während das Weitergabefahrzeug und das Übernahmefahrzeug mit einander angeglichener Geschwindigkeit und Fahrtrichtung, vorzugsweise in engem Abstand zueinander fahren, wird wenigstens eine Sendung vom Weitergabefahrzeug an das Übernahmefahrzeug übergeben. Es kann alternativ auch eine Sendung von dem Übernahmefahrzeug an das Weitergabefahrzeug übergeben werden. Das Übergeben kann dabei mehr oder weniger gezielt oder gerichtet erfolgen. In einem einfachen Fall wird die Sendung einfach auf die Ladefläche des entsprechenden Fahrzeugs geschoben oder gelegt. Dabei kann es von Bedeutung sein, in welcher Ausrichtung sich die Fahrzeuge zueinander sowie die Sendung zu den Fahrzeugen befinden. Um hier eine möglichst große Flexibilität zu erlangen, können die Mittel zur Übergabe der wenigstens einen Sendung sehr unterschiedlich ausgebildet sein. Es besteht bedarfsweise auch der Zwang, sich erst Zugang zu einem umschlossenen Laderaum des Übernahmefahrzeugs zu verschaffen oder aber die wenigstens eine Sendung aus einem umschlossenen Laderaum des Weitergabefahrzeugs herauszubekommen, um eine Übergabe der wenigstens einen Sendung durchführen zu können. Wie auch immer die Übergabe der wenigstens einen Sendung erfolgt ist, das Weitergabefahrzeug und das Übernahmefahrzeug werden sich anschließend wieder voneinander entfernen und in andere Richtungen und/oder mit anderen Geschwindigkeiten weiterfahren.

Nachfolgend werden das Verfahren und das Weitergabefahrzeug zur Vermeidung unnötiger Wiederholungen und der besseren Verständlichkeit halber zusammen beschrieben, ohne jeweils im Einzelnen zwischen dem Verfahren und dem Weitergabefahrzeug zu unterscheiden. Dem Fachmann werden aber dennoch anhand der jeweiligen Kotexte die jeweils hinsichtlich des Verfahrens und/oder des Weitergabefahrzeugs bevorzugten Merkmale ersichtlich.

Bei einer ersten besonders bevorzugten Ausgestaltung des Verfahrens erfasst das Weitergabefahrzeug mit wenigstens einem Sensor die relative Geschwindigkeit und/oder die relative Fahrtrichtung des Übernahmefahrzeugs. Alternativ oder zusätzlich kann aber auch das Übernahmefahrzeug mit wenigstens einem Sensor die relative Geschwindigkeit und/oder die relative Fahrtrichtung des Weitergabefahrzeugs erfassen. Dies dient in besonderem Maße der feinen Annäherung der Fahrzeuge. Das Weitergabefahrzeug und das Übernahmefahrzeug sind dann vorzugsweise nach der groben Annäherung so nahe beieinander, dass der wenigstens eine Sensor das andere Fahrzeug, insbesondere dessen Geschwindigkeit und/oder Fahrtrichtung, erfassen kann. Dann muss nicht das Weitergabefahrzeug und/oder das Übernahmefahrzeug seine Geschwindigkeit und/oder seine Fahrtrichtung erfassen, um die entsprechenden Informationen anschließend an das andere Fahrzeug oder eine externe Steuereinrichtung zu übermitteln. Dies wäre zwar grundsätzlich denkbar, allerdings kann die entsprechende Datenerfassung zu ungenau und/oder der Datenaustausch zu langsam sein, um die feine Annäherung effektiv, schnell und zuverlässig regeln zu können. Mithin ist es bevorzugt, wenn die Angleichung der Geschwindigkeiten und der Fahrtrichtungen von Weitergabefahrzeug und Übernahmefahrzeug aneinander anhand der mit dem wenigstens einen Sensor erfassten relativen Geschwindigkeit und/oder relativen Fahrtrichtung, insbesondere des jeweils anderen Fahrzeugs, durchgeführt wird. Dabei steht der Erfassung der Geschwindigkeit und/oder der Fahrtrichtung bedarfsweise der Erfassung von mit der Geschwindigkeit und der Fahrtrichtung verbundenen Informationen gleich.

Für den Fall, dass die Angleichung von Fahrtrichtung und Geschwindigkeit sowohl von dem Weitergabefahrzeug als auch von dem Übernahmefahrzeug erfolgt, bietet es sich an, wenn die entsprechende Regelung bzw. Anpassung durch das Weitergabefahrzeug und das Übernahmefahrzeug aufeinander abgestimmt sind. Es kann aber auch die Regelung von einer Regeleinheit erfolgen, die dann die Anpassung der Geschwindigkeiten und/oder der Fahrtrichtungen beider Fahrzeuge aufeinander abgestimmt steuern kann. Dabei ist es konstruktiv einfach und für den erforderlichen Datenaustausch zweckmäßig, wenn sich die Regeleinheit vom Weitergabefahrzeug oder vom Übernahmefahrzeug mitgeführt wird. Die Regeleinheit kann aber auch extern vorgehalten werden. Dann sollte jedoch ein zuverlässiger und ausreichend schneller Datenaustausch gewährleistet werden, was grundsätzlich mit zunehmendem Abstand der Regeleinheit vom Weitergabefahrzeug und Übernahmefahrzeug problematischer wird. Bei der feinen Annäherung kann der Datenaustausch wegen der größeren Näher der Fahrzeuge zueinander tendenziell einfacher bereitgestellt werden.

Um die Übergabe wenigstens einer Sendung von dem Weitergabefahrzeug an das Übernahmefahrzeug und/oder umgekehrt zu vereinfachen, bietet es sich an, wenn das Weitergabefahrzeug und das Übernahmefahrzeug nach dem Angleichen der Geschwindigkeiten und der Fahrtrichtungen nebeneinander und/oder hintereinander herfahren. Typischerweise sind Nutzfahrzeuge länger als breit, so dass grundsätzlich weniger Flexibilität bei der Übergabe der wenigstens einen Sendung besteht, wenn die Fahrzeuge hintereinander her fahren. Die Übergabe der Sendung wird dann nämlich prinzipiell durch eine Rückwand des einen Fahrzeugs und eine Stirnwand des anderen Fahrzeugs erfolgen. Die Sendung kann auf diese Weise aber nicht unbedingt an jeden Ort der Ladefläche oder des Laderaums gelangen, etwa wenn der Zugang zu diesem Ort durch andere Sendungen oder eine andere Ladung blockiert ist. Dies ist prinzipiell weniger wahrscheinlich, wenn die Fahrzeuge nebeneinander herfahren, insbesondere wenn dies in einer geeigneten und/oder variierbaren versetzten Anordnung in Längsrichtung der Fahrzeuge erfolgt. Allerdings muss ausreichend Platz vorhanden sein, damit die Fahrzeuge während der Übergabe der wenigstens einen Sendung nebeneinander herfahren können.

Die Übergabe der wenigstens einen Sendung vom Weitergabefahrzeug an das Übernahmefahrzeug und/oder umgekehrt kann vereinfacht werden, wenn das Weitergabefahrzeug und das Übernahmefahrzeug nach der Angleichung der Geschwindigkeit und der Fahrtrichtung, insbesondere vor der Übergabe der Sendung, mechanisch miteinander verbunden werden. Dies verringert auch den Regelungsaufwand für die weitere Ausrichtung der Fahrzeuge gegeneinander. Durch die mechanische Verbindung kann nämlich sichergestellt werden, dass sich die beiden Fahrzeuge mit derselben Geschwindigkeit und Fahrtrichtung bewegen, oder es lässt sich dies durch die wenigstens eine mechanische Verbindung zwischen den Fahrzeugen wenigstens unterstützen.

Logistisch kann es bevorzugt sein, dass nicht nur wenigstens eine Sendung von dem Weitergabefahrzeug an das Übernahmefahrzeug übergeben wird, sondern auch wenigstens eine Sendung vom Übernahmefahrzeug an das Weitergabefahrzeug übergeben wird. Dies erfolgt dabei weiter bevorzugt, während beide Fahrzeuge in Bewegung sind, und zwar vornehmlich mit aneinander angeglichener Geschwindigkeit und in aneinander angeglichener Fahrtrichtung. Letztlich kann bedarfsweise die Trennung zwischen Weitergabefahrzeug und Übernahmefahrzeug verschwimmen. Es kann beispielsweise ein Fahrzeug in Bezug auf eine Sendung das Weitergabefahrzeug und in Bezug auf eine andere Sendung das Übernahmefahrzeug sein. Es wird aber vorliegend der einfacheren Verständlichkeit halber weiter von einem Weitergabefahrzeug und einem Übernahmefahrzeug gesprochen.

Zur Steigerung der Effizienz des Verfahrens kann es zweckmäßig sein, wenn das Weitergabefahrzeug und/oder das Übernahmefahrzeug wenigsten während des Angleichens der Geschwindigkeiten und der Fahrtrichtungen und/oder während der Übergabe der wenigstens einen Sendung, wenigstens teilweise autonom fährt. Es kann also vorgesehen sein, dass das Weitergabefahrzeug und/oder das Übernahmefahrzeug vollkommen ohne Fahrer auskommen. Dies spart nicht nur die entsprechenden Personalkosten ein, sondern vermeidet auch menschliche Fehler beim Annähern und/oder beim Übergeben der wenigstens einen Sendung vom Weitergabefahrzeug an das Übernahmefahrzeug und/oder umgekehrt. Es kann aber auch ein Fahrer vorgesehen sein, wobei dann einzelne Tätigkeiten vom wenigstens einen entsprechenden Fahrzeug autonom durchgeführt werden. Beispielsweise kann ab einer bestimmten Relativposition von Weitergabefahrzeug und/oder Übernahmefahrzeug zueinander wenigstens ein Fahrzeug das Fahren sowie bedarfsweise das weitere Annähern übernehmen und autonom durchführen. Dies kann sinnvoll sein, weil beispielsweise eine Elektronik das, insbesondere feine, Annähern der Fahrzeuge besser und zuverlässiger bewerkstelligen kann. Alternativ oder zusätzlich kann es das autonome Fahren wenigstens eines Fahrzeugs erleichtern, dass die beiden Fahrzeuge mit aneinander angeglichener Geschwindigkeit und Fahrtrichtung in einem geringen Abstand zueinander fahren, insbesondere während die beiden Fahrzeuge mechanisch miteinander verbunden sind.

Alternativ oder zusätzlich kann auch das Übergeben der wenigstens einen Sendung wenigstens teilweise autonom erfolgen. Auch hier kann es zweckmäßig sein, wenn die Übergabe der Sendung von einer Elektronik anstatt von einem Bediener gesteuert wird. Die Elektronik kann diese Aufgabe bedarfsweise viel genauer und zuverlässiger durchführen als ein Bediener. Das setzt bedarfsweise allerdings entsprechende Sensoren voraus, die beispielsweise erfassen, wo sich die Sendung befindet, wo die Sendung platziert werden kann oder soll und/oder ob die Übergabe der Sendung korrekt erfolgt ist. Der wenigstens eine entsprechende Sensor ist dabei bedarfsweise mit einer Regeleinheit verbunden, die die vom wenigstens einen Sensor ermittelten Informationen aufnimmt und in Steuerungsbefehle umsetzt.

Die Ubergabe wird weiter vereinfacht, wenn vor der Ubergabe der wenigstens einen Sendung ein Laderaum des Weitergabefahrzeugs und/oder des Übernahmefahrzeugs geöffnet wird. Dies kann von einem Fahrer eingeleitet werden, ohne dass dieser das Öffnen selbst vornehmen muss. Dies setzt jedoch voraus, dass das Fahrzeug eine Einrichtung aufweist, die nach Aktivierung das Öffnen des Laderaums automatisch durchführt. Wenn kein Fahrer vorgesehen ist oder Fehlbedienungen vermieden werden sollen, kann der Laderaum aber auch völlig autonom, also ohne Eingriff des Fahrers oder eines Bedieners, geöffnet werden. Alternativ oder zusätzlich wird nach der Übergabe der wenigstens einen Sendung ein Laderaum des Weitergabefahrzeugs und/oder des Übernahmefahrzeugs, vorzugsweise autonom, geschlossen.

Dabei werden grundsätzlich die gleichen Vorteile erzielt wie beim entsprechenden Öffnen des Laderaums.

Wenn wenigstens das Weitergabefahrzeug und/oder das Übernahmefahrzeug eine Zugangseinrichtung zum Laderaum aufweist, wobei die Zugangseinrichtung zum Laderaum beispielsweise wenigstens eine Tür, eine verschiebbare Seitenwand oder Seitenplane, eine Heckportalklappe oder ein Rolltor sein kann bietet es sich an, wenn vor der Übergabe der wenigstens einen Sendung eine Zugangseinrichtung zum Laderaum des Weitergabefahrzeugs und/oder des Übernahmefahrzeugs, vorzugsweise autonom, entriegelt wird. Das Entriegeln ermöglicht den ungehinderten Zugang zum Laderaum, der ansonsten aber verschlossen sein, kann, um den Zugang unbefugter Personen zum Laderaum zu verhindern. Wird das Entriegeln autonom durchgeführt, kann vermieden werden, dass die Zugangseinrichtung von unbefugten Personen entriegelt wird, etwa vor dem Entriegeln eine elektronische Autorisierung durchgeführt wird. Alternativ oder zusätzlich kann es bevorzugt sein, wenn nach der Übergabe der wenigstens einen Sendung eine Zugangseinrichtung zum Laderaum des Weitergabefahrzeugs und/oder des Übernahmefahrzeugs verriegelt wird. Unbefugte Personen können dann nicht ohne Weiteres Zugang zum Laderaum erhalten. Wenn die Verriegelung autonom erfolgt, können das Entriegeln und das Verriegeln bedarfsweise in gleicher Weise erfolgen, was den konstruktiven Aufwand senkt. Die autonome Verriegelung kann aber auch sicherstellen und bedarfsweise dokumentieren, dass die Verriegelung vorschriftsmäßig erfolgt ist. Die wenigstens eine Zugangseinrichtung bleibt dann nicht versehentlich entriegelt.

Um die grobe Annäherung und/oder die feine Annäherung des Weitergabefahrzeugs und des Übernahmefahrzeugs zuverlässig schnell und genau durchzuführen, bietet es sich an, wenn wenigstens in zeitlichen Abständen die Position des Weitergabefahrzeugs und/oder des Übernahmefahrzeugs ermittelt wird. Ist diese wenigstens eine Position bekannt, kann das jeweils andere Fahrzeug, vorzugsweise anhand von GNSS (Global Navigation Satellite System)-Informationen, wie etwa GPS (Global Positioning System)-Informationen, GLONASS-Informationen, Galileo-Informationen, Beidou-Informationen und/oder QZSS (Quasi Zenit Satelliten System )-Informationen, in Richtung des Fahrzeugs oder in Richtung eines geschätzten zukünftigen Aufenthaltsorts fahren. Im letztgenannten Fall werden die Informationen betreffend die Geschwindigkeit und die Fahrtrichtung des anderen Fahrzeugs genutzt, um abzuschätzen, wo sich das Fahrzeug zu einem Zeitpunkt schätzungsweise befinden wird, bei dem eine grobe Annäherung beider Fahrzeuge mutmaßlich abgeschlossen sein könnte. Anders ausgedrückt fährt ein Fahrzeug einen Ort an, von dem erwartet werden kann, dass sich beide Fahrzeuge dort zu einem späteren Zeitpunkt treffen.

Bei der feinen Annäherung können bedarfsweise direkt Informationen betreffend die relative Geschwindigkeit und/oder die relative Fahrtrichtung des jeweils anderen Fahrzeugs ermittelt werden. Dazu kann das Weitergabefahrzeug und/oder das Übernahmefahrzeug entsprechende Sensoren aufweisen, die das jeweils andere Fahrzeug erfassen und dabei registrieren, ob und in welcher Weise sich die beiden Fahrzeuge annähern. Dies erlaubt eine präzise, schnelle und zuverlässige Regelung der feinen Annäherung. Da sich nach der groben Annäherung die Fahrzeuge in Reichweite entsprechender Sensoren befinden, muss die feine Annäherung nicht anhand einer absoluten Positionsbestimmung erfolgen, es kann vielmehr gleich eine relative Geschwindigkeit und/oder eine relative Fahrtrichtung ermittelt werden. Ein entsprechender Sensor kann also die Veränderung der Distanz und der Richtung in der sich das andere Fahrzeug befindet, ermitteln, um so Informationen für die feine Annäherung abzuleiten.

Alternativ oder zusätzlich können Informationen betreffend die relative Geschwindigkeit und/oder die relative Fahrtrichtung, Informationen zum Öffnen und/oder Schließen eines Laderaums und/oder Informationen betreffend das Verriegeln und/oder Entriegeln einer Zugangseinrichtung zum Laderaum der Einfachheit und Zuverlässigkeit halber anhand eines auslesbaren Radio Frequency Identification (RFID) und/oder Near Field Communication (NFC) Tags, über Bluetooth, Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), von dem Weitergabefahrzeug an das Übernahmefahrzeug und/oder umgekehrt übertragen werden. Ein Radio Frequency Identification (RFID) Tag, ein Near Field Communication (NFC) Tag und/oder Bluetooth kann besonders zweckmäßig zu einer Autorisierung genutzt werden, um ein sicheres Öffnen, Schließen, Entriegeln und Verriegeln des Laderaums zu bewirken, wenn sich die Fahrzeuge nahe beieinander befinden. Ist dies nicht der Fall und müssen die Fahrzeuge noch grob und/oder fein angenähert werden, kann eine Weitergabe von Informationen mittels Wireless Local Area Network (WLAN) und/oder einem Mobilfunknetz zweckmäßiger sein, weil diese Kommunikationsarten grundsätzlich eine schnelle und zuverlässige Kommunikation über eine große Distanz ermöglichen.

Die Übergabe der wenigstens einen Sendung kann zweckmäßig mittels einer Übergabeeinrichtung des Weitergabefahrzeugs und/oder des Übernahmefahrzeugs erfolgen. Die Übergabeeinrichtung kann dabei von einem Fahrzeug mitgeführt werden, das eine Sendung an ein anderes Fahrzeug übergeben soll, wozu dann die Übergabeeinrichtung genutzt wird. Die Übergabeeinrichtung kann alternativ oder zusätzlich auch dazu genutzt werden, eine Sendung des anderen Fahrzeugs auf das Fahrzeug umfassend die Übergabeeinrichtung zu befördern. In beiden Fällen sollte die Übergabeeinrichtung einen möglichst ungehinderten Zugang zu der wenigstens einen Sendung haben. Zudem sollte genügend Platz für das Handling der wenigstens einen Sendung vorhanden sein. Die Übergabeeinrichtung kann beispielsweise als Greifarm ausgebildet sein, weil ein Greifarm sehr vielfältig bewegt werden kann und so sehr unterschiedliche Arten der Übergabe bewerkstelligen kann. Allerdings ist die Steuerung des Greifarms recht aufwendig und der Greifarm benötigt recht viel Platz. Einfacher kann dagegen eine Art Förderband zur Beförderung der wenigstens einen Sendung von einem Fahrzeug zum anderen Fahrzeug sein. Noch einfacher kann es sein, wenn wenigstens eine Gleiteinheit und/oder Rolleinheit sowie wenigstens eine Schiebeeinrichtung vorgesehen sind. Die Schiebeeinheit kann dann die wenigstens eine Sendung über die Gleiteinheit und/oder Rolleinheit zum anderen Fahrzeug herüberschieben.

Alternativ oder zusätzlich kann das Handling der wenigstens einen zu übergebenden Sendung dadurch vereinfacht werden, dass die Sendung auf einem standardisierten Träger, insbesondere einer standardisierten Palette, und/oder in einem standardisierten Behälter, insbesondere Container, vorgesehen ist. Dann können auch sehr unterschiedlich geformte Sendungen und/oder Sendungen mit sehr unterschiedlicher Größe gleichartig oder auf nur wenige unterschiedliche Arten übergeben werden. Die Übergabe muss also nicht individuell an die zu übergebende Sendung, sondern allenfalls an den Träger angepasst werden.

Hinsichtlich des Weitergabefahrzeugs ist es besonders bevorzugt, wenn dieses wenigstens einen Sensor zur Ermittlung der relativen Geschwindigkeit und/oder der relativen Fahrtrichtung des Übernahmefahrzeugs aufweist. Das erhöht die Genauigkeit der feinen Annäherung.

Alternativ oder zusätzlich kann wenigstens eine Verbindungseinrichtung zur Verbindung des Weitergabefahrzeugs mit dem Übernahmefahrzeug während der Übergabe der wenigstens einen Sendung vorgesehen sein. Die Verbindungseinrichtung kann dann zur Kopplung von Weitergabefahrzeug und Übernahmefahrzeug genutzt werden. Das Weitergabefahrzeug und das Übernahmefahrzeug behalten dann ihre relative Position bei der Übergabe der wenigstens einen Sendung wenigstens im Wesentlichen bei.

Damit eine Fremdsteuerung des Weitergabefahrzeugs nicht oder nur bedingt erforderlich ist, insebsondere aber auch um ein autonomes Fahren des Weitergabefahrzeugs zu erreichen, kann wenigstens eine Steuereinrichtung für das autonome Fahren und/oder Annähern, für das Erfassen der Relativgeschwindigkeit und/oder der relativen Fahrtrichtung, für das autonome Angleichen der Geschwindigkeit und/oder der Fahrtrichtung, für das autonome Öffnen und/oder Schließen des Laderaums, für das autonome Entriegeln und/oder Verriegeln der Zugangseinrichtung zum Laderaum, für das autonome Übergeben der wenigstens einen Sendung und/oder für das wenigstens eine autonome Steuern der Übergabeeinrichtung vorgesehen sein. Die Steuereinrichtung kann also wenigstens einzelne der zur Übergabe der Sendung erforderlichen Schritte und Tätigkeiten mehr oder weniger selbständig steuern.

Nachfolgend wird die Erfindung anhand einer wenigstens ein Ausführungsbeispiel darstellenden Zeichnung näher erläutert. In der Zeichnung zeigt
- Fig. 1A-G: verschiedene Verfahrensschritte eines ersten erfindungsgemäßen Verfahrens in schematischer Darstellung,
- Fig. 2: einen Verfahrensschritt eines zweiten erfindungsgemäßen Verfahrens in schematischer Darstellung,
- Fig. 3A-E: verschiedene Verfahrensschritte eines dritten erfindungsgemäßen Verfahrens in schematischer Darstellung und
- Fig. 4: ein schematisches Blockfließbild des Verfahrens zur Weiterleitung wenigstens einer Sendung von einem Weitergabefahrzeug an ein Übernahmefahrzeug.

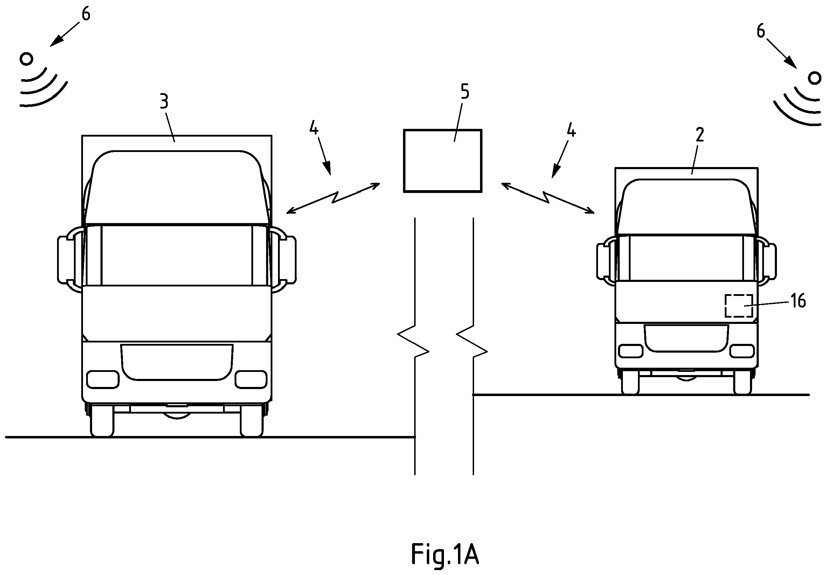

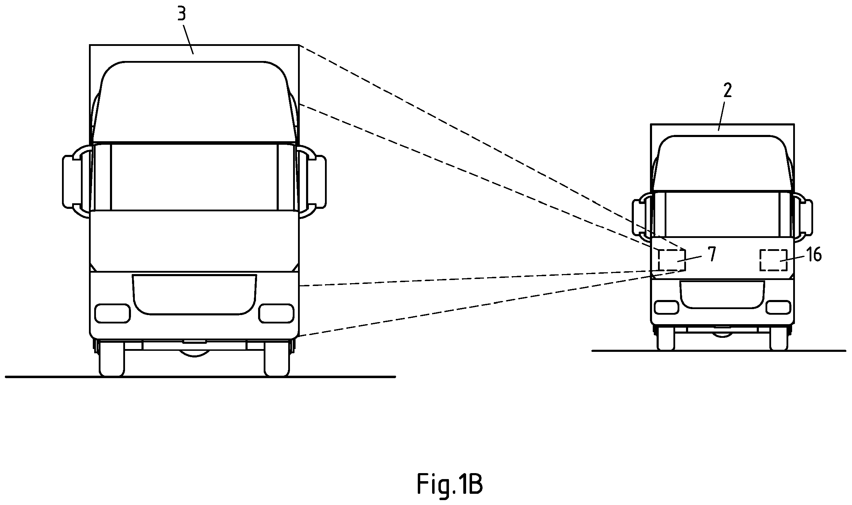

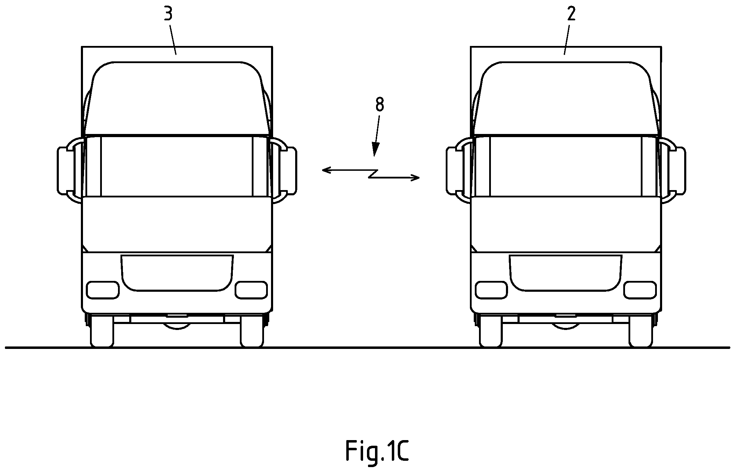

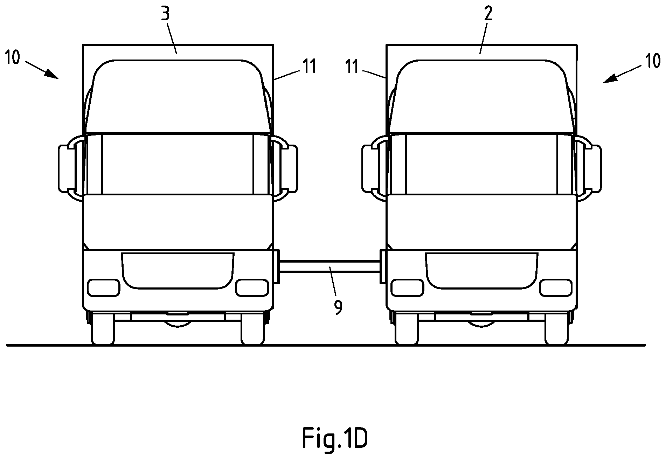

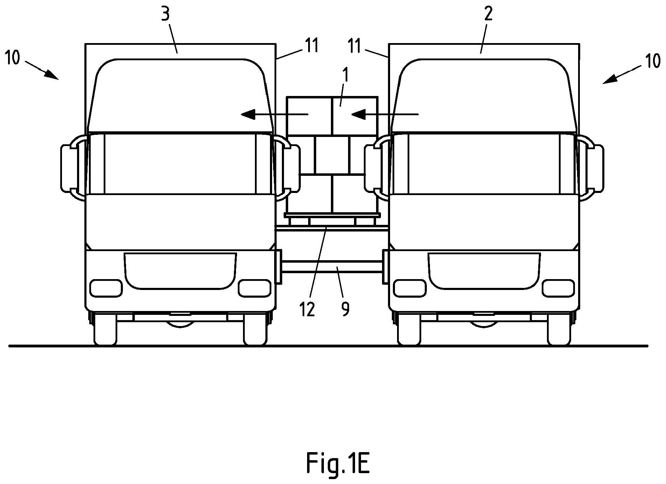

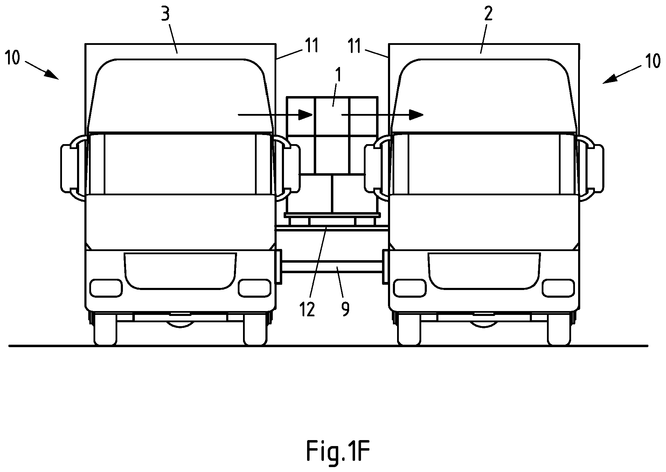

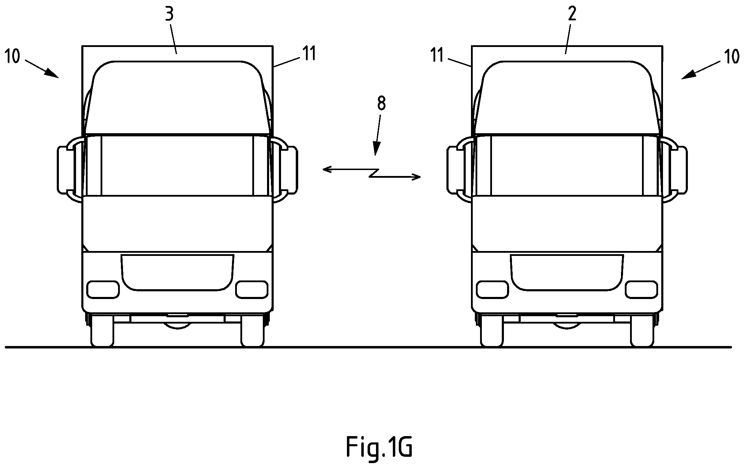

In der Fig. 1 ist schematisch der Ablauf eines Verfahrens zur Weiterleitung wenigstens einer Sendung 1 von einem Weitergabefahrzeug 2 an ein Übernahmefahrzeug 3 dargestellt. Dabei kann bedarfsweise gemäß Fig. 1A eine grobe Annäherung des Weitergabefahrzeugs 2 und des Übernahmefahrzeugs 3 erfolgen. Zunächst befinden sind das Weitergabefahrzeug 2 und das Übernahmefahrzeug 3 weit voneinander entfernt, beispielsweise wenigstens so weit, dass kein Sichtkontakt zwischen Weitergabefahrzeug 2 und Übernahmefahrzeug 3 besteht. Damit nun beispielsweise das Weitergabefahrzeug 2 über die Position des Übernahmefahrzeugs 3 informiert ist, kann das Übernahmefahrzeug 3 seine Position in regelmäßigen Abständen erfassen und die Positionsinformationen 4 an eine zentrale Datenerfassungseinheit 5 weiterleiten. Der Einfachheit halber nutzt das Übernahmefahrzeug 3 zur Erfassung seiner Position GNSS (Global Navigation Satellite System)-Informationen in Form von GPS (Global Positioning System)-Informationen 6. Die Positionsinformationen 4 des Übernahmefahrzeugs können nun an das Weitergabefahrzeug 2 übermittelt werden. Dies wäre prinzipiell auch direkt ohne die Nutzung einer zentralen Datenerfassungseinheit 5 möglich. Dann würden die Positionsinformationen 4 beispielsweise in einer Steuereinheit des Weitergabefahrzeugs 2 verarbeitet.

In der zentralen Datenerfassungseinheit 5 oder in der Steuereinheit des Weitergabefahrzeugs 2 kann anhand der zeitlichen Veränderung der Positionsinformationen 4 eine Fahrtrichtung und bedarfsweise auch eine zukünftige Position des Übernahmefahrzeugs 3 abgeleitet werden. Die erleichtert dem Weitergabefahrzeug 2 die grobe Annäherung an das Übernahmefahrzeug 3. Alternativ oder zusätzlich kann auch des Weitergabefahrzeug 2 seine Position, etwa anhand von GNSS (Global Navigation Satellite System)-Informationen in Form von GPS (Global Positioning System)-Informationen 6 ermitteln und an die entsprechenden Positionsinformationen 4 an die zentrale Datenerfassungseinheit 5 oder direkt an das Übernahmefahrzeug 3 weiterleiten. So kann dann in analoger Weise das Übernahmefahrzeug 3 die grobe Annäherung an das Weitergabefahrzeug 2 bewerkstelligen. Das Übernahmefahrzeug 3 muss dann dafür Sorge tragen, dass sich die Positionen von Weitergabefahrzeug 2 und Übernahmefahrzeug 3 annähern. Wenn Weitergabefahrzeug 2 und Übernahmefahrzeug 3 ihre jeweiligen Positionen erfassen und an das jeweils andere Fahrzeug 3,2 bzw. eine zentrale Datenerfassungseinheit 5 weiterleiten, können Weitergabefahrzeug 2 und Übernahmefahrzeug 3 so anhand der entsprechenden Positionsinformationen 4 geleitet werden, dass eine schnelle Annäherung von Weitergabefahrzeug 2 und Übernahmefahrzeug 3 aneinander ohne unnötige Wegstrecken erfolgen kann.

Das dargestellte Weitergabefahrzeug 2 und das dargestellte Übernahmefahrzeug 3 können beide sowohl von einem Fahrer gefahren werden oder autonom fahren. Ist ein Fahrer vorhanden können diesem bedarfsweise Positionsinformationen 4 oder Richtungsinformationen über das andere Fahrzeug 3,2 angezeigt werden, so dass der Fahrer das Fahrzeug 2,3 in Richtung des anderen Fahrzeugs 3,2 lenken kann. Es kann dem Fahrer der Einfachheit halber beispielsweise eine Route in einem Navigationsgerät vorgeschlagen werden, da der Fahrer sich typischerweise an die vorhanden Straßen halten muss und nicht Luftlinie in Richtung des anderen Fahrzeugs 3,2 fahren kann. Fährt das Weitergabefahrzeug 2 und/oder das Übernahmefahrzeug 3 autonom, also ohne Eingreifen eines Fahrers, können die Fahrtroute und die Geschwindigkeit des entsprechenden Fahrzeugs 2,3 direkt anhand der vorliegenden Positionsinformationen 4 ermittelt und vorgegeben werden. Dies kann effizienter als die Zwischenschaltung eines Fahrers sein. Dieser ist nämlich einerseits nicht zwingend erforderlich und kann andererseits subjektiv ungünstige Entscheidungen hinsichtlich der Route und/oder der Geschwindigkeit des Fahrzeugs 2,3 treffen.

Nachdem die grobe Annäherung von Weitergabefahrzeug 2 und Übernahmefahrzeug 3 abgeschlossen ist, kann eine feine Annäherung von Weitergabefahrzeug 2 und Übernahmefahrzeug 3 erfolgen, die auf der Grundlage anderer Informationen basieren kann als die grobe Annäherung. Dies ist insbesondere deshalb der Fall, weil das Weitergabefahrzeug 2 und das Übernahmefahrzeug 3 dann nahe beieinander sind und bedarfsweise Blickkontakt zueinander haben. Dabei wird unter Blickkontakt nicht zwingend nur verstanden, dass das eine Fahrzeug 2,3 von dem anderen Fahrzeug 3,2 aus gesehen werden kann, sondern vielmehr, dass ein Fahrzeug 2,3 das andere Fahrzeug 3,2 über wenigstens einen Sensor 7 direkt erfassen kann, wie dies in der Fig. 1B dargestellt ist.

Gemäß dem Beispiel gemäß Fig. 1B weist das Weitergabefahrzeug 2 einen Sensor 7 auf, der das Übergabefahrzeug 3 erfasst und der Ermittlung dienen kann, welche Distanz zwischen beiden Fahrzeugen 2,3 besteht und in welcher Richtung sich das Übernahmefahrzeug 3 ausgehend vom Weitergabefahrzeug 2 befindet. Dabei kann der Sensor 7 bedarfsweise ein optischer Sensor oder ein Radarsensor sein. Diese Informationen können dann verwendet werden, um eine sehr genaue weitere Annäherung von Weitergabefahrzeug 2 und Übernahmefahrzeug 3 durchzuführen. Alternativ oder zusätzlich kann natürlich auch wenigstens ein Sensor des Übernahmefahrzeugs 3 die relative Position des Weitergabefahrzeugs 2 erfassen, um die Annäherung dadurch noch zweckmäßiger zu gestalten oder wenigstens zu überwachen. Die Annäherung kann dann wieder wahlweise von wenigstens einem Fahrzeug 2,3 autonom durchgeführt werden. Es kann sich aber auch in jedem einzelnen Fall eines Fahrers bedient werden.

In der Fig. 1C sind Weitergabefahrzeug 2 und Übernahmefahrzeug 3 nach der feinen Annäherung dargestellt, während das Weitergabefahrzeug 2 und das Übernahmefahrzeug 3 in einem geringen Abstand nebeneinander herfahren. Es kann nun eine Kommunikation zwischen dem Weitergabefahrzeug 2 und dem Übernahmefahrzeug 3 zur Weitergabe von Informationen 8 erfolgen, um eine koordinierte Übergabe der wenigstens einen Sendung 1 vorzubereiten. Die Kommunikation von Weitergabefahrzeug 2und Übernahmefahrzeug 3 kann dabei unter Verwendung eines Radio Frequency Identification (RFID) Tags und/oder Near Field Communication (NFC) Tags, über Bluetooth, Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), erfolgen. Dabei kann die Kommunikation bedarfsweise verschlüsselt erfolgen, so dass die Information unbefugten Personen nicht zugänglich ist. Bei der Kommunikation können aber auch Autorisierungsinformationen übermittelt werden, damit die wenigstens eine Sendung 1 nicht in unbefugte Hände fallen kann.

Beispielsweise auf der Basis der Kommunikation von Weitergabefahrzeug 2 und Übernahmefahrzeug 3 können diese mechanisch miteinander verbunden werden, wie dies in der Fig. 1D dargestellt ist. Das Weitergabefahrzeug 2 und das Übernahmefahrzeug 3 sind dann zu einer Einheit gekoppelt und weisen einen in etwa vorbestimmten Abstand auf, der infolge der Verbindung 9 auch zuverlässig weiter eingehalten werden kann. Beim dargestellten Beispiel fahren das Weitergabefahrzeug 2 und das Übernahmefahrzeug 3 vor und nach der Kopplung nebeneinander. Denkbar wäre aber auch, dass Weitergabefahrzeug 2 und Übernahmefahrzeug 3 hintereinander fahren.

Sofern das Weitergabefahrzeug 2 und/oder das Übernahmefahrzeug 3 einen geschlossenen Laderaum 10 und keine offene Ladefläche aufweisen, muss zur Übergabe der wenigstens einen Sendung 1 dieser Laderaum 10, insbesondere eine Zugangseinrichtung 11 zum Laderaum 10, geöffnet werden. Dies kann bedarfsweise ebenfalls durch eine Weitergabe von Informationen 8 im Wege der zuvor beschriebenen Kommunikation zwischen dem Weitergabefahrzeug 2 und dem Übernahmefahrzeug 3 eingeleitet werden. So kann beispielsweise festgestellt und mitgeteilt werden, dass die Kopplung erfolgreich abgeschlossen ist und der Laderaum 10 geöffnet werden kann, wobei eine Autorisierung für das Öffnen des wenigstens einen Laderaums 10 Vorrausetzung sein kann. Diese Autorisierung kann auch durch eine entsprechende Kommunikation zwischen Weitergabefahrzeug 2 und Übernahmefahrzeug 3 erfolgen. Dabei kann vor dem Öffnen des Laderaums 10 ein Entriegeln des Laderaums 10, insbesondere einer Zugangseinrichtung 11, erfolgen. Laderäume 10 können nämlich typischerweise verriegelt sein, um unbefugten Personen keinen Zugang zum Laderaum 10 zu ermöglichen.

In der Fig. 1E ist eine Möglichkeit der Übergabe der wenigstens einen Sendung 1 dargestellt. Es wird eine Plattform 12 so zwischen die Fahrzeuge 2,3 platziert, dass ein Ende der Plattform 12 auf dem Weitergabefahrzeug 2 und das gegenüberliegende Ende der Plattform 12 auf dem Übernahmefahrzeug 3, insbesondere jeweils den Ladeböden der Fahrzeuge 2,3, aufliegt. Sodann kann die wenigstens eine Sendung 1, über eine nicht dargestellte Einrichtung von Weitergabefahrzeug 2 auf das Übernahmefahrzeug 3 geschoben werden. Es kann, wie dies in der Fig. 1F symbolisiert ist, alterantiv oder zusätzlich auch wenigstens eine Sendung 1 von dem Übergabefahrzeug 3 an das Weitergabefahrzeug 2 übergeben werden. Die Übergabe der wenigstens einen Sendung 1 und die Kopplung von Weitergabefahrzeug 2 und Übernahmefahrzeug 3 kann vorzugsweise autonom erfolgen. Ein menschliches Fehlbedienen kann so ausgeschlossen werden. Gleiches gilt für das Trennen von Weitergabefahrzeug 2 auf Übernahmefahrzeug 3 nach der Übergabe der wenigstens einen Sendung 1, das Schließen des Laderaums 10, insbesondere einer Zugangseinrichtung 11, und/oder das Verriegeln des Laderaums 10, insbesondere einer Zugangseinrichtung 11. Grundsätzlich können all diese Tätigkeiten natürlich auch händisch von einem Bediener durchgeführt oder ausgelöst werden.

Unabhängig davon kann die Übermittlung von Informationen 8 zwischen Weitergabefahrzeug 2 und Übernahmefahrzeug 3, wie sie in der Fig. 1G symbolisiert ist, unterstützend wirken. So kann beispielsweise festgestellt und mitgeteilt werden, dass die Übergabe der wenigstens einen Sendung 1 abgeschlossen ist, dass eine Trennung der Fahrzeuge 2,3 erfolgen kann, dass eine Trennung erfolgt ist, dass eine Zugangseinrichtung 11 zum Laderaum 10 geschlossen und/oder verriegelt werden kann und/oder dass eine Zugangseinrichtung 11 zum Laderaums geschlossen und/oder verriegelt ist.

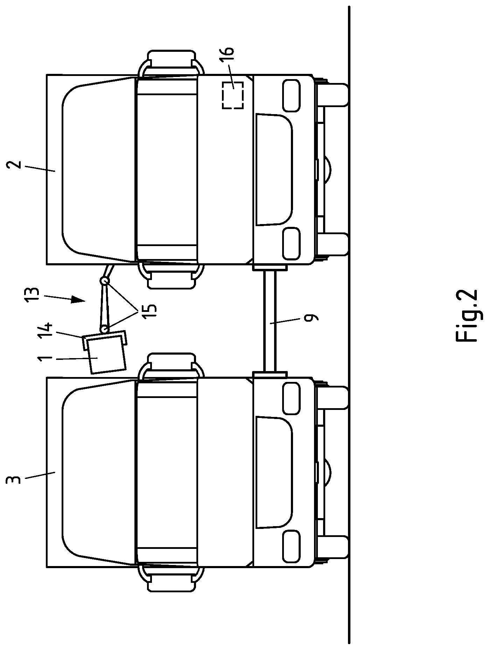

In der Fig. 2 ist eine Alternative zu der in den Fig. 1E und 1F dargestellten Übergabe der wenigstens einen Sendung 1 dargestellt. Dabei bedient sich das Weitergabefahrzeug 2 nämlich einer Übergabeeinrichtung 13 in Form eines Greifarms, der von dem Weitergabefahrzeug 2 mitgeführt wird und der einen Greifabschnitt 14 zum Ergreifen sehr unterschiedlich geformter und sehr unterschiedlich großer Sendungen 1 aufweist. Über diese Übergabeeinrichtung 13 kann auch einfach wenigstens eine Sendung 1 aus dem Übernahmefahrzeug 3 entnommen werden, so dass das Übernahmefahrzeug 3 auch zum Austauschen von Sendungen 1 keine eigene Übergabeeinrichtung aufweisen muss. Um die Übergabeeinrichtung 13 in Form des Greifarms sehr flexibel einsetzen zu können, weist die Übergabeeinrichtung 13 vorzugsweise mehrere Gelenke 15 auf.

Zudem weist das Weitergabefahrzeug 2 und/oder das Übernahmefahrzeug 3 eine Steuereinrichtung 16 auf, die das grobe und/oder feine Annähern von Weitergabefahrzeug 2 und Übernahmefahrzeug 3 steuern kann. Die Steuereinrichtung 16 kann alternativ oder zusätzlich auch zum Empfang, zum Senden und zum Verarbeiten von Informationen 8 genutzt werden. Die Steuereinrichtung dient bedarfsweise dem Öffnen des Laderaums 10, dem Entriegeln der Zugangseinrichtung 11, dem Schließen des Laderaums 10 und/oder dem Verriegeln der Zugangseinrichtung 11.

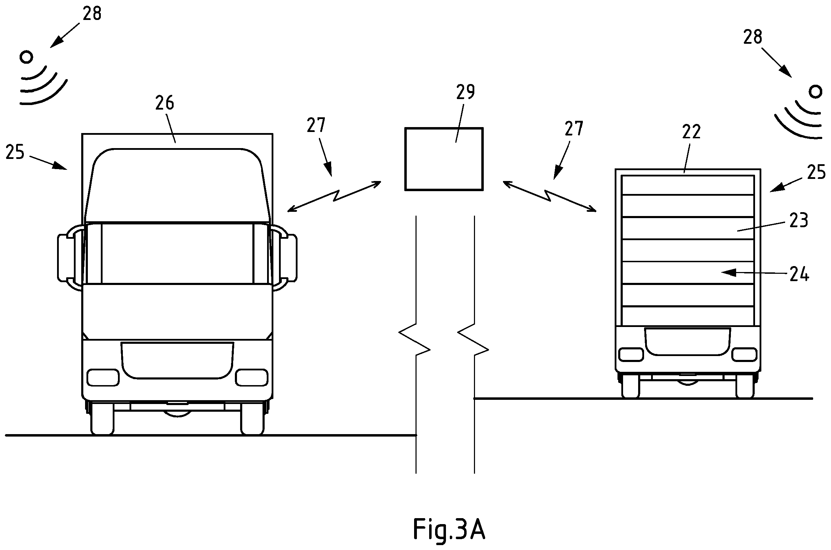

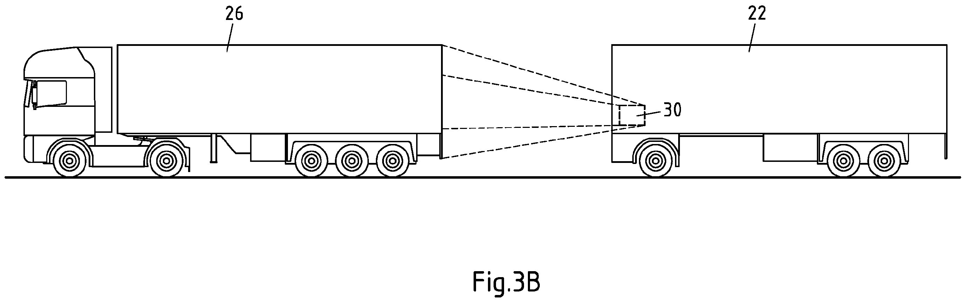

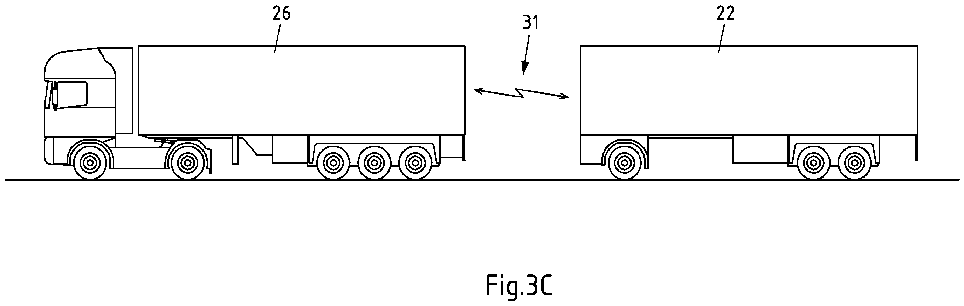

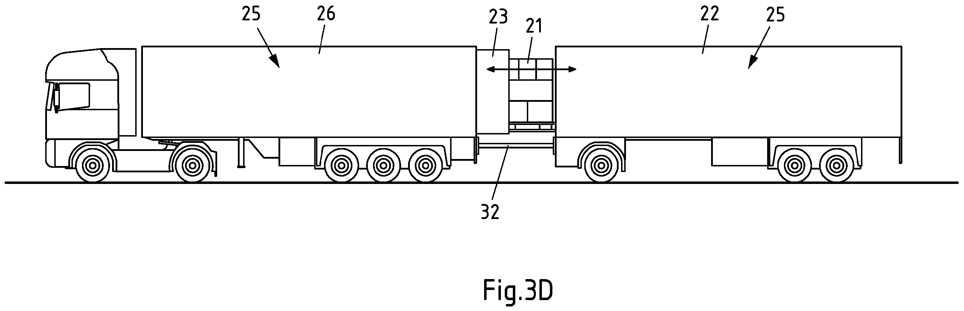

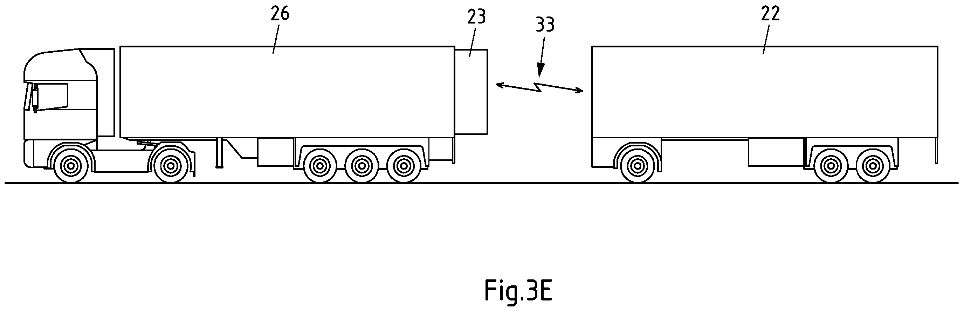

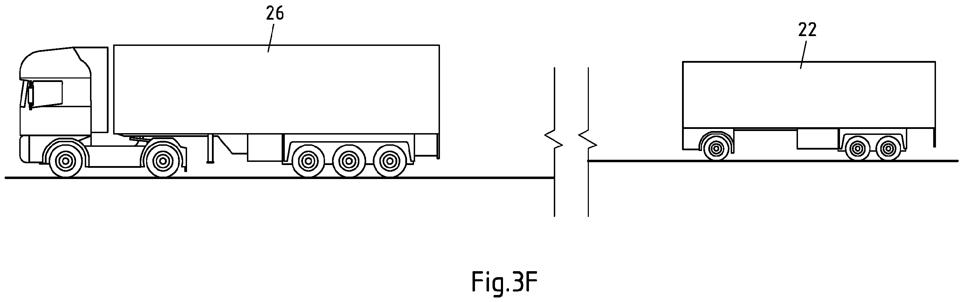

In der Fig. 3 ist eine Abwandlung des zuvor beschriebenen Verfahrens zur Übergabe wenigstens einer Sendung 21 dargestellt. Bei diesem ist wenigstens das Weitergabefahrzeug 22 autonom und kommt somit ohne Fahrer aus. Dies ermöglicht es, eine Zugangseinrichtung 23 in die Stirnwand 24 des Weitergabefahrzeugs 22 zu integrieren. Bei dem in der Fig. 3A dargestellten Beispiel handelt es sich bei der Zugangseinrichtung 23 um ein Rolltor, das nach oben gefahren werden kann, um den Zugang zum Laderaum 25 freizugeben. Auch bei Verwendung eines derartigen Weitergabefahrzeugs 22 kann die grobe Annäherung zwischen Weitergabefahrzeug 22 und Übergabefahrzeug 26 wie zuvor bereits beschrieben erfolgen. Das Weitergabefahrzeug 22 und/oder das Übernahmefahrzeug 26 können Positionsinformationen 27, beispielsweise anhand von GNSS (Global Navigation Satellite System)-Informationen in Form von GPS-Informationen 28 ermitteln und an das entsprechend andere Fahrzeug 26,22 oder eine zentrale Datenerfassungseinheit 29 weiterleiten. Dazu bietet sich beispielsweise die Verwendung eines Mobilfunknetzes an.

Wenn die grobe Annäherung von Weitergabefahrzeug 22 und Übernahmefahrzeug 26 erfolgt ist, befindet sich das Weitergabefahrzeug 22 beispielsweise hinter dem Übergabefahrzeug 26 und erfasst das Übergabefahrzeug 26 mit einem Sensor 30, um die feine Annäherung von Weitergabefahrzeug 22 und Übernahmefahrzeug 26 autonom durchzuführen. Dies ist in der Fig. 3B symbolisiert. Bei dem dargestellten Beispiel fährt das Übernahmefahrzeug 26 einfach weiter, ohne sich aktiv an der feinen Annäherung zu beteiligen. Dies wird dem autonom fahrenden Weitergabefahrzeug 22 überlassen, das diese Aufgabe sehr genau und zuverlässig erfüllen kann. Das Weitergabefahrzeug 22 fährt somit sehr nah an das hintere Ende des Übernahmefahrzeugs 26 heran.

Nun können das Weitergabefahrzeug 22 und das Übernahmefahrzeug 26, wie dies in der Fig. 3C dargestellt ist, miteinander kommunizieren und beispielsweise Informationen 31 zum Entriegeln und Öffnen der Zugangseinrichtungen 23 zum Laderaum 25 des Übernahmefahrzeugs 26 in Form von Heckflügeltüren führen. Beispielsweise parallel dazu kann das Weitergabefahrzeug 22 eine mechanische Verbindung 32 mit dem Übernahmefahrzeug 26 ausbilden, um den Abstand zwischen Weitergabefahrzeug 22 und Übernahmefahrzeug 26 etwa konstant zu halten. Das Weitergabefahrzeug 22 entriegelt und öffnet zudem seine Zugangseinrichtung 23 zum Laderaum 25, woraufhin wenigstens eine Sendung 21 von dem Weitergabefahrzeug 22 an das Übernahmefahrzeug 26 übergeben wird, wie dies in der Fig. 3D dargestellt ist. Bedarfsweise erfolgt auch eine Übergabe wenigstens einer Sendung 21 von dem Übernahmefahrzeug 26 an das Weitergabefahrzeug 22. Für die jeweilige Übergabe können unterschiedliche Übergabeeinrichtungen vorgesehen sein, etwa die zuvor bereits beschriebenen Übergabeeinrichtungen.

Nach der erfolgten Übergabe wird beispielsweise die in der Fig. 3E dargestellte Situation erreicht, in der das Weitergabefahrzeug 22 bereits von dem Übernahmefahrzeug 26 abgekoppelt worden ist. Es erfolgt eine weitere Kommunikation zum Austausch von Informationen 33, etwa per Bluetooth, die das Schließen und Verriegeln der Zugangseinrichtung 23 zum Laderaum 25 des Übernahmefahrzeugs 26 einleitet. Das Weitergabefahrzeug 22 schließt seine Zugangseinrichtung 23 zum Laderaum 25 ebenfalls und das Weitergabefahrzeug 22 und das Übernahmefahrzeug 26 entfernen sich wieder voneinander, wie dies in der Fig. 3F dargestellt ist.

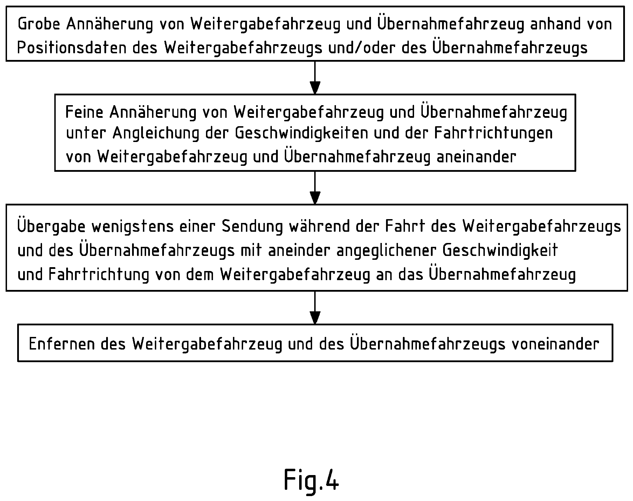

In der Fig. 4 ist der grundsätzliche Verfahrensablauf erneut in Form eines Blockfließbilds dargestellt. Zunächst erfolgt eine grobe Annäherung von Weitergabefahrzeug und Übernahmefahrzeug anhand von Positionsdaten des Weitergabefahrzeugs und/oder des Übernahmefahrzeugs. Anschließend wird eine feine Annäherung von Weitergabefahrzeug und Übernahmefahrzeug unter Angleichung der Geschwindigkeiten und der Fahrtrichtungen von Weitergabefahrzeug und Übernahmefahrzeug aneinander durchgeführt. Ist dies erfolgt, wird während der Fahrt des Weitergabefahrzeugs und des Übernahmefahrzeugs mit aneinander angeglichener Geschwindigkeit und Fahrtrichtung die wenigstens eine Sendung von dem Weitergabefahrzeug an das Übernahmefahrzeug übergeben. Nach der Übergabe der wenigstens einen Sendung entfernen sich das Weitergabefahrzeug und das Übernahmefahrzeug wieder voneinander.

## Patentansprüche

1. Verfahren zur Weiterleitung wenigstens einer Sendung (1,21) von einem Weitergabefahrzeug (2,22) an ein Übernahmefahrzeug (3,26),
- bei dem eine grobe Annäherung von Weitergabefahrzeug (2,22) und Übernahmefahrzeug (3,26) anhand von Positionsdaten des Weitergabefahrzeugs (2,22) und/oder des Übernahmefahrzeugs (3,26)durchgeführt wird,
- bei dem nach der groben Annäherung eine feine Annäherung von Weitergabefahrzeug (2,22) und Übernahmefahrzeug (3,26) unter Angleichung der Geschwindigkeiten und der Fahrtrichtungen von Weitergabefahrzeug (2,22) und Übernahmefahrzeug (3,26) aneinander durchgeführt wird,
- bei dem während der Fahrt des Weitergabefahrzeugs (2,22) und des Übernahmefahrzeugs (3,26) mit aneinander angeglichener Geschwindigkeit und Fahrtrichtung die wenigstens eine Sendung (1,21) von dem Weitergabefahrzeug (2,22) an das Übernahmefahrzeug (3,26)übergeben wird und
bei dem sich nach erfolgter Übergabe der wenigstens einen Sendung (1,21) das Weitergabefahrzeug (2,22) und das Übernahmefahrzeug (3,26) voneinander entfernen,
**dadurch gekennzeichnet, dass** die wenigstens eine Sendung (1,21) ein Stückgut oder eine Verpackung ist und
- dass vor der Übergabe der wenigstens einen Sendung (1,21) ein Laderaum (10,25) des Weitergabefahrzeugs (2,22) und/oder des Übernahmefahrzeugs (3,26) geöffnet wird und/oder nach der Übergabe der wenigstens einen Sendung (1,21) ein Laderaum (10,25) des Weitergabefahrzeugs (2,22) und/oder des Übernahmefahrzeugs (3,26) geschlossen wird.

2. Verfahren nach Anspruch 1,
bei dem das Weitergabefahrzeug (2,22) mit wenigstens einem Sensor (7,30) die relative Geschwindigkeit und/oder die relative Fahrtrichtung des Übernahmefahrzeugs (3,26) und/oder das Übernahmefahrzeug (3,26) mit wenigstens einem Sensor (7,30) die relative Geschwindigkeit und/oder die relative Fahrtrichtung des Weitergabefahrzeugs (2,22) erfasst und
bei dem die Angleichung der Geschwindigkeiten und der Fahrtrichtungen von Weitergabefahrzeug (2,22) und Übernahmefahrzeug (3,26) aneinander anhand der mit dem wenigstens einen Sensor (7,30) erfassten relativen Geschwindigkeit und/oder relativen Fahrtrichtung durchgeführt wird.

3. Verfahren nach Anspruch 1 oder 2,
bei dem das Weitergabefahrzeug (2,22) und das Übernahmefahrzeug (3,26) nach dem Angleichen der Geschwindigkeiten und der Fahrtrichtungen nebeneinander und/oder hintereinander her fahren und/oder
bei dem das Weitergabefahrzeug (2,22) und das Übernahmefahrzeug (3,26) nach der Anpassung der Geschwindigkeit und der Fahrtrichtung, insbesondere vor der Übergabe der Sendung (1,21), mechanisch miteinander verbunden werden.

4. Verfahren nach einem der Ansprüche 1 bis 3,
bei dem während der Fahrt des Weitergabefahrzeugs (2,22) und des Übernahmefahrzeugs (3,26) jeweils mit angeglichener Geschwindigkeit und Fahrtrichtung wenigstens eine Sendung (1,21) von dem Übernahmefahrzeug (3,26) an das Weitergabefahrzeug (2,22) übergeben wird und/oder
bei dem das Weitergabefahrzeug (2,22) und/oder das Übernahmefahrzeug (3,26) wenigstens während des Angleichens der Geschwindigkeiten und der Fahrtrichtungen und/oder während der Übergabe der wenigstens einen Sendung (1,21), Wenigstens teilweise autonom fährt.

5. Verfahren nach einem der Ansprüche 1 bis 4,
bei dem das Übergeben der wenigstens einen Sendung (1,21) wenigstens teilweise autonom erfolgt und/oder
bei dem vor der Übergabe der wenigstens einen Sendung (1,21) ein Laderaum (10,25) des Weitergabefahrzeugs (2,22) und/oder des Übernahmefahrzeugs (3,26) autonom geöffnet wird und/oder
bei dem nach der Übergabe der wenigstens einen Sendung (1,21) ein Laderaum (10,25) des Weitergabefahrzeugs (2,22) und/oder des Übernahmefahrzeugs (3,26) autonom geschlossen wird.

6. Verfahren nach einem der Ansprüche 1 bis 5,
bei dem vor der Übergabe der wenigstens einen Sendung (1,21) eine Zugangseinrichtung (11,23) zum Laderaum des Weitergabefahrzeugs (2,22) und/oder des Übernahmefahrzeugs (3,26), vorzugsweise autonom, entriegelt wird und/oder
bei dem nach der Übergabe der wenigstens einen Sendung (1,21) eine Zugangseinrichtung (11,23) zum Laderaum (10,25) des Weitergabefahrzeugs (2,22) und/oder des Übernahmefahrzeugs (3,26), vorzugsweise autonom, verriegelt wird.

7. Verfahren nach einem der Ansprüche 1 bis 6,
bei dem zur groben Annäherung und/oder zur feinen Annäherung wenigstens in zeitlichen Abständen die Position des Weitergabefahrzeugs (2,22) und/oder des Übernahmefahrzeugs (3,26), vorzugsweise anhand von GNSS (Global Navigation Satellite System)-Informationen, etwa in Form von GPS (Global Positioning System)-Informationen (6,28) , GLONASS-Informationen, Galileo-Informationen, Beidou-Informationen und/oder QZSS (Quasi Zenit Satelliten System )-Informationen, ermittelt wird und
bei dem die Position oder eine daraus abgeleitete Information an das Weitergabefahrzeugs (2,22), das Übernahmefahrzeug (3,26) und/oder eine Steuereinrichtung (16) übermittelt wird.

8. Verfahren nach einem der Ansprüche 1 bis 7,
bei dem bei der feinen Annäherung Informationen (8,27,31,33) betreffend die relative Geschwindigkeit und/oder die relative Fahrtrichtung von dem Weitergabefahrzeug (2,22) an das Übernahmefahrzeug (3,26) und/oder umgekehrt weitergeleitet werden.

9. Verfahren nach einem der Ansprüche 1 bis 8,
bei dem Informationen (4,27) betreffend die relative Geschwindigkeit und/oder die relative Fahrtrichtung, Informationen (8,31,33) zum Öffnen und/oder Schließen eines Laderaums (10,25) und/oder Informationen betreffend das Verriegeln und/oder Entriegeln einer Zugangseinrichtung (11,23) zum Laderaum (10,25) anhand eines auslesbaren Radio Frequency Identification (RFID) und/oder Near Field Communication (NFC) Tags, über Bluetooth, Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), von dem Weitergabefahrzeug (2,22) an das Übernahmefahrzeug (3,26) und/öder umgekehrt übertragen werden.

10. Verfahren nach einem der Ansprüche 1 bis 9,
bei dem die wenigstens eine Sendung (1,21) mittels einer Übergabeeinrichtung (13) des Weitergabefahrzeugs (2,22) und/oder des Übernahmefahrzeugs (3,26), vorzugsweise autonom, übergeben wird und
bei dem, vorzugsweise, eine Übergabeeinrichtung (13) mit einem Förderband und/oder einem Greifarm verwendet wird.

11. Verfahren nach einem der Ansprüche 1 bis 10,
bei dem die Sendung (1,21) auf einem standardisierten Träger, insbesondere einer standardisierten Palette, und/oder in einem standardisierten Behälter, insbesondere Container, vorgesehen ist.

12. Weitergabefahrzeug (2,22) zur Durchführung des Verfahrens nach einem der Ansprüche 1 bis 11.

13. Weitergabefahrzeug nach Anspruch 12,
**dadurch gekennzeichnet, dass** wenigstens ein Sensor (7,30) zur Ermittlung der relativen Geschwindigkeit und/oder der relativen Fahrtrichtung des Übernahmefahrzeugs (3,26) vorgesehen ist.

14. Weitergabefahrzeug nach Anspruch 12 oder 13,
**dadurch gekennzeichnet, dass** wenigstens eine Verbindungseinrichtung zur Verbindung des Weitergabefahrzeugs (2,22) mit dem Übernahmefahrzeug (3,26) während der Übergabe der wenigstens einen Sendung (1,21) vorgesehen ist.

15. Weitergabefahrzeug nach einem der Ansprüche 12 bis 14.
**dadurch gekennzeichnet, dass** wenigstens eine Steuereinrichtung (16) für das autonome Fahren und/oder Annähern, für das Erfassen der Relativgeschwindigkeit und/oder der relativen Fahrtrichtung, für das autonome Angleichen der Geschwindigkeit und/oder der Fahrtrichtung, für das autonome Öffnen und/oder Schließen des Laderaums (10,25), für das autonome Entriegeln und/oder Verriegeln der Zugangseinrichtung (11,23) zum Laderaum (10,25), für das autonome Übergeben der wenigstens einen Sendung (1,21) und/oder für das wenigstens eine autonome Steuern der Übergabeeinrichtung (13) aufweist.

## Claims

1. Method for passing on at least one consignment (1,21) from a transferring vehicle (2,22) to a receiving vehicle (3,26),
- in which the transferring vehicle (2,22) and the receiving vehicle (3,26) are made to roughly approach one another on the basis of position data of the transferring vehicle (2,22) and/or of the receiving vehicle (3,26),
- in which, after the transferring vehicle (2,22) and the receiving vehicle (3,26) have been made to roughly approach one another, they are made to approach one another precisely while approximating the speeds and the directions of travel of the transferring vehicle (2,22) and the receiving vehicle (3,26) to one another,
- in which, while the transferring vehicle (2,22) and the receiving vehicle (3,26) are traveling with speeds and directions of travel which are approximate to one another, the at least one consignment (1,21) is transferred from the transferring vehicle (2,22) to the receiving vehicle (3,26), and
- in which, after the transfer of the at least one consignment (1,21) has taken place, the transferring vehicle (2,22) and the receiving vehicle (3,26) move away from one another,
**characterized in that**,
- the at least one consignment (1,21) is a piece goods or a packaging, and
- **in that** before the transfer of the at least one consignment (1,21), a cargo space (10,25) of the transferring vehicle (2,22) and/or of the receiving vehicle (3,26) is opened and/or after the transfer of the at least one consignment (1,21) a cargo space (10,25) of the transferring vehicle (2,22) and/or of the receiving vehicle (3,26) is closed.

2. Method according to Claim 1,
in which the transferring vehicle (2,22) detects, with at least one sensor (7,30), the relative speed and/or the relative direction of travel of the receiving vehicle (3,26), and/or the receiving vehicle (3,26) detects, with at least one sensor (7,30), the relative speed and/or the relative direction of travel of the transferring vehicle (2,22), and
in which the approximation of the speeds and the directions of travel of the transferring vehicle (2,22) and the receiving vehicle (3,26) to one another is carried out on the basis of the relative speed and/or relative direction of travel detected with the at least one sensor (7,30).

3. Method according to Claim 1 or 2,
in which the transferring vehicle (2,22) and the receiving vehicle (3,26) travel one next to the other and/or one behind the other after the approximation of the speeds and of the directions of travel and/or in which after the adaptation of the speed and of the direction of travel, the transferring vehicle (2,22) and the receiving vehicle (3,26) are mechanically connected to one another, in particular before the transfer of the consignment (1,21).

4. Method according to one of Claims 1 to 3,
in which, while the transferring vehicle (2,22) and the receiving vehicle (3,26) are each traveling with an approximate speed and direction of travel, at least one consignment (1,21) is transferred from the receiving vehicle (3,26) to the transferring vehicle (2,22) and/or in which the transferring vehicle (2,22) and/or the receiving vehicle (3,26) travel/travels at least partially autonomously at least during the approximation of the speeds and the directions of travel and/or during the transfer of the at least one consignment (1,21).

5. Method according to one of Claims 1 to 4,
in which the transfer of the at least one consignment (1,21) takes place at least partially autonomously and/or in which, before the transfer of the at least one consignment (1,21), a cargo space (10,25) of the transferring vehicle (2,22) and/or of the receiving vehicle (3,26) is opened autonomously and/or in which after the transfer of the at least one consignment (1,21) a cargo space (10,25) of the transferring vehicle (2,22) and/or of the receiving vehicle (3,26) is closed autonomously.

6. Method according to one of Claims 1 to 5,
in which, before the transfer of the at least one consignment (1,21), an access facility (11,23) for accessing the cargo space of the transferring vehicle (2,22) and/or of the receiving vehicle (3,26) is unlocked, preferably autonomously, and/or in which, after the transfer of the at least one consignment (1,21), an access facility (11,23) for accessing the cargo space (10,25) of the transferring vehicle (2,22) and/or of the receiving vehicle (3,26) is locked, preferably autonomously.

7. Method according to one of Claims 1 to 6,
in which, for the rough approach and/or for the precise approach, the position of the transferring vehicle (2,22) and/or of the receiving vehicle (3,26) is determined at least at time intervals, preferably on the basis of GNSS (Global Navigation Satellite System) information, for example in the form of GPS (Global Positioning System) information (6,28) , GLONASS information, Galileo information, Beidou information and/or QZSS (Quasi-Zenith Satellite System) information, and
in which the position or a piece of information derived therefrom is passed on to the transferring vehicle (2,22), the receiving vehicle (3,26) and/or a control device (16).

8. Method according to one of Claims 1 to 7,
in which, during the precise approach, information (8,27,31,33) relating to the relative speed and/or the relative direction of travel is passed on from the transferring vehicle (2,22) to the receiving vehicle (3,26) and/or vice versa.

9. Method according to one of Claims 1 to 8,
in which information (4,27) relating to the relative speed and/or the relative direction of travel, information (8,31,33) relating to the opening and/or closing of a cargo space (10,25) and/or information relating to the locking and/or unlocking of an access facility (11,23) for accessing the cargo space (10,25) is transmitted from the transferring vehicle (2,22) to the receiving vehicle (3,26) and/or vice versa on the basis of a readable radio frequency identification (RFID) and/or near field communication (NFC) tag, via Bluetooth, a Wireless Local Area Network (WLAN) and/or a mobile radio network, in particular Global System for Mobile Communication (GSM), Universal Mobile Telecommunications System (UMTS) and/or Long Term Evolution (LTE).

10. Method according to one of Claims 1 to 9,
in which at least one consignment (1,21) is transferred, preferably autonomously, by means of a transfer device (13) of the transferring vehicle (2,22) and/or of the receiving vehicle (3,26) and in which, preferably, a transfer device (13) is used with a conveyor belt and/or a gripping arm.

11. Method according to one of Claims 1 to 10,
in which the consignment (1,21) is provided on a standardized carrier, in particular a standardized pallet and/or in a standardized container device, in particular container.

12. Transferring vehicle (2,22) for performing the method according to one of Claims 1 to 11.

13. Transferring vehicle according to Claim 12,
**characterized in that**
at least one sensor (7,30) is provided for determining the relative speed and/or the relative direction of travel of the receiving vehicle (3,26).

14. Transferring vehicle according to Claim 12 or 13,
**characterized in that**
at least one connecting device is provided for connecting the transferring vehicle (2,22) to the receiving vehicle (3,26) during the transfer of the at least one consignment (1,21).

15. Transferring vehicle according to one of Claims 12 to 14.
**characterized in that**
at least one control device (16) for the autonomous travel and/or approach, for detecting the relative speed and/or the relative direction of travel, for the autonomous approximation of the speed and/or of the direction of travel, for the autonomous opening and/or closing of the cargo space (10,25), for the autonomous unlocking and/or locking of the access facility (11,23) for accessing the cargo space (10,25), for the autonomous transfer of the at least one consignment (1,21) and/or for the at least one autonomous control of the transfer device (13) is provided.

## Revendications

1. Procédé de transfert d'au moins un envoi (1, 21) d'un véhicule d'acheminement (2, 22) à un véhicule de prise en charge (3, 26),
- dans lequel un rapprochement approximatif du véhicule d'acheminement (2, 22) et du véhicule de prise en charge (3, 26) est effectué à l'aide des données de position du véhicule d'acheminement (2, 22) et/ou du véhicule de prise en charge (3, 26),
- dans lequel, après le rapprochement approximatif, l'on effectue un rapprochement plus précis du véhicule d'acheminement (2, 22) et du véhicule de prise en charge (3,26) en alignant les vitesses et les directions de déplacement du véhicule d'acheminement (2, 22) et du véhicule de prise en charge (3, 26) l'un par rapport à l'autre,
- dans lequel, pendant le déplacement du véhicule d'acheminement (2, 22) et du véhicule de prise en charge (3, 26), avec une vitesse et une direction de déplacement mutuellement adaptées, au moins un envoi (1, 21) est transféré du véhicule d'acheminement (2, 22) au véhicule de prise en charge (3,26) et
- dans lequel, après le transfert d'au moins un envoi (1, 21), le véhicule d'acheminement (2, 22) et le véhicule de prise en charge (3,26) s'éloignent l'un de l'autre,
**caractérisé en ce que**
- au moins un envoi (1, 21) est une marchandise ou un emballage et
- **en ce que**, avant le transfert d'au moins un envoi (1, 21), un espace de chargement (10, 25) du véhicule d'acheminement (2, 22) et/ou du véhicule de prise en charge (3, 26) est ouvert et/ou, après le transfert d'au moins un envoi (1, 21), un espace de chargement (10, 25) du véhicule d'acheminement (2, 22) et/ou du véhicule de prise en charge (3, 26) est fermé.

2. Procédé selon la revendication 1,
dans lequel le véhicule d'acheminement (2, 22) détecte la vitesse relative et/ou la direction de déplacement relative du véhicule de prise en charge (3, 26) avec au moins un capteur (7, 30) et/ou le véhicule de prise en charge (3, 26) détecte la vitesse relative et/ou la direction de déplacement relative du véhicule d'acheminement (2, 22) avec au moins un capteur (7, 30), et
dans lequel l'on effectue l'alignement des vitesses et des directions de déplacement du véhicule de d'acheminement (2, 22) et du véhicule de prise en charge (3, 26), l'un par rapport à l'autre, en fonction de la vitesse relative et/ou de la direction de déplacement relative détectée par au moins un capteur (7, 30).

3. Procédé selon la revendication 1 ou 2,
dans lequel le véhicule d'acheminement (2, 22) et le véhicule de prise en charge (3, 26) se déplacent l'un à côté de l'autre et/ou l'un derrière l'autre après l'alignement des vitesses et des directions de déplacement et/ou
dans lequel le véhicule d'acheminement (2, 22) et le véhicule de prise en charge (3, 26) sont reliés mécaniquement l'un à l'autre après le réglage de la vitesse et de la direction de déplacement, notamment avant le transfert de l'envoi (1, 21).

4. Procédé selon l'une des revendications 1 à 3,
dans lequel, pendant le déplacement du véhicule d'acheminement (2, 22) et du véhicule de prise en charge (3, 26), respectivement à la même vitesse et dans la même direction de déplacement, au moins un envoi (1, 21) est transféré du véhicule de prise en charge (3, 26) au véhicule d'acheminement (2, 22) et/ou
dans lequel le véhicule d'acheminement (2, 22) et/ou le véhicule de prise en charge (3, 26) se déplace de manière au moins partiellement autonome au moins pendant l'alignement des vitesses et des directions de déplacement et/ou pendant le transfert d'au moins un envoi (1, 21).

5. Procédé selon l'une des revendications 1 à 4,
dans lequel le transfert d'au moins un envoi (1, 21) a lieu de manière au moins partiellement autonome et/ou
dans lequel, avant le transfert d'au moins un envoi (1, 21), un espace de chargement (10, 25) du véhicule de d'acheminement (2, 22) et/ou du véhicule de prise en charge (3, 26) est ouvert de manière autonome, et/ou
dans lequel, après le transfert d'au moins un envoi (1, 21), un espace de chargement (10, 25) du véhicule d'acheminement (2, 22) et/ou du véhicule de prise en charge (3, 26) est fermé de manière autonome.

6. Procédé selon l'une des revendications 1 à 5,
dans lequel, avant le transfert d'au moins un envoi (1, 21), un dispositif d'accès (11, 23) à l'espace de chargement du véhicule d'acheminement (2, 22) et/ou du véhicule de prise en charge (3, 26) est déverrouillé, de préférence de manière autonome, et/ou
dans lequel, après le transfert d'au moins un envoi (1, 21), un dispositif d'accès (11, 23) à l'espace de chargement (10, 25) du véhicule d'acheminement (2, 22) et/ou du véhicule de prise en charge (3, 26) est verrouillé, de préférence de manière autonome.

7. Procédé selon l'une des revendications 1 à 6,
dans lequel, pour le rapprochement approximatif et/ou pour le rapprochement plus précis, la position du véhicule d'acheminement (2, 22) et/ou du véhicule de prise en charge (3, 26) est déterminée, au moins à des intervalles de temps, de préférence en fonction d'informations GNSS (Global Navigation Satellite System), par exemple sous la forme d'informations GPS (Global Positioning System) (6, 28), d'informations GLONASS, d'informations Galileo, d'informations Beidou et/ou d'informations QZSS (Quasi Zenit Satellite System), et
dans lequel la position ou les informations qui en découlent sont transmises au véhicule d'acheminement (2, 22), au véhicule de prise en charge (3, 26) et/ou à un dispositif de commande (16).

8. Procédé selon l'une des revendications 1 à 7,
dans lequel, pendant le rapprochement plus précis, des informations (8, 27, 31, 33) concernant la vitesse relative et/ou la direction de déplacement relative sont transmises du véhicule d'acheminement (2, 22) au véhicule de prise en charge (3, 26) et/ou vice versa.

9. Procédé selon l'une des revendications 1 à 8,
dans lequel des informations (4, 27) concernant la vitesse relative et/ou la direction de déplacement relative, des informations (8, 31, 33) pour ouvrir et/ou fermer un espace de chargement (10, 25) et/ou des informations concernant le verrouillage et/ou le déverrouillage d'un dispositif d'accès (11, 23) à l'espace de chargement (10, 25) sont transmises à l'aide d'une étiquette lisible d'identification par radiofréquence (RFID) et/ou de communication en champ proche (NFC), par l'intermédiaire de Bluetooth, d'un réseau local sans fil (WLAN) et/ou d'un réseau de radiocommunication mobile, en particulier Global System for Mobile Communication (GSM), Universal Mobile Telecommunications System (UMTS) et/ou Long Term Evolution (LTE), du véhicule d'acheminement (2, 22) au véhicule de prise en charge (3,26) et/ou vice versa.

10. Procédé selon l'une des revendications 1 à 9,
dans lequel au moins un envoi (1, 21) est transféré à l'aide d'un dispositif de transfert (13) du véhicule d'acheminement (2, 22) et/ou du véhicule de prise en charge (3, 26), de préférence de manière autonome, et
dans lequel, de préférence, l'on utilise un dispositif de transfert (13) avec une bande transporteuse et/ou un bras de préhension.

11. Procédé selon l'une des revendications 1 à 10,
dans lequel l'envoi (1, 21) est fourni sur un support normalisé, en particulier une palette normalisée, et/ou dans un récipient normalisé, en particulier un conteneur.

12. Véhicule d'acheminement (2, 22) pour la mise en œuvre du procédé selon l'une des revendications 1 à 11.

13. Véhicule d'acheminement selon la revendication 12,
**caractérisé en ce que** l'on prévoit au moins un capteur (7, 30) pour déterminer la vitesse relative et/ou la direction de déplacement relative du véhicule de prise en charge (3, 26).

14. Véhicule d'acheminement selon la revendication 12 ou 13,
**caractérisé en ce que** l'on prévoit au moins un dispositif de liaison pour relier le véhicule d'acheminement (2, 22) au véhicule de prise en charge (3, 26) pendant le transfert d'au moins un envoi (1, 21).

15. Véhicule d'acheminement selon la revendication 12 à 14,
**caractérisé en ce que** l'on prévoit au moins un dispositif de commande (16) pour le déplacement et/ou le rapprochement autonome, pour détecter la vitesse relative et/ou la direction de déplacement relative, pour aligner, de manière autonome, la vitesse et/ou la direction de déplacement, pour l'ouverture et/ou la fermeture autonome de l'espace de chargement (10, 25), pour le déverrouillage et/ou le verrouillage autonome du dispositif d'accès (11, 23) à l'espace de chargement (10, 25), pour le transfert autonome d'au moins un envoi (1, 21) et/ou pour au moins une commande autonome du dispositif de transfert (13).
